# EUROPEAN PATENT APPLICATION

(11) **EP 4 311 619 A1**
(43) Date of publication of application: **31.01.2024**
(21) Application number: 23187841.4
(22) Date of filing: 26.07.2023
(51) Int. Cl.: B23D 59/00, B23D 57/00, B23D 45/12

(54) **PIPE CUTTING ACCESSORY FOR POWER TOOL**

(30) Priority: 27.07.2022 US 202263369575 P; 24.07.2023 US 202318357672
(71) Applicant: Black & Decker, Inc., New Britain, CT 06053 (US)
(72) Inventor: SEALY, Derek, Catonsville, 21228 (US); BOURRET, Anthony Y., Millersville, 21108 (US); LOURENCO, Marco, Lebanon, 45036 (US)
(74) Representative: SBD IPAdmin

(57) **Abstract**

An exemplary pipe cutting accessory (100, 110, 200, 300, 310) includes a shaft (102, 122, 202, 222, 302) extending along an axis and having a front end portion (104, 204, 304) a rear end portion (106, 206, 306) configured to be coupled to a tool holder (252) of a power tool (250). A disc-shaped cutting blade (112, 212, 312, 314) is fixedly coupled to the front end portion (104, 204, 304) of the shaft (102, 122, 202, 222, 302) and configured to rotate about the axis together with the shaft (102, 122, 202, 222, 302). A roller portion (130, 230, 330, 350) is concentrically received over the front end portion (104, 204, 304) rearward of the cutting blade (112, 212, 312, 314). The roller portion (130, 230, 330, 350) has a cylindrical outer surface (131, 231, 331) configured to roll along an inside wall of a pipe while the shaft (102, 122, 202, 222, 302) and cutting blade (112, 212, 312, 314) rotate about the axis to cut a pipe from an inside of the pipe. A depth stop (330, 350) may be movably coupled to the shaft (102, 122, 202, 222, 302) or the roller portion (130, 230, 330, 350) and configured to abut an end of the pipe.

## Description

### TECHNICAL FIELD

This application relates to a pipe cutting power tool accessory.

### BACKGROUND

Certain pipe cutting accessories for power tools include a shaft having a rear end couplable to a power tool and a front end, and a disc-shaped cutting blade secured to the front end by a removable screw. The accessory may be coupled to a power tool and used to cut a pipe, such as a PVC pipe embedded in concrete, from the inside of the pipe.

### SUMMARY

According to the present invention there is provided a pipe cutting accessory according to claim 1, wherein optional features thereof are defined in dependent claims 2 to 15.

In an aspect, a pipe cutting accessory includes a shaft extending along an axis and having a front end portion a rear end portion configured to be coupled to a tool holder of a power tool; a disc-shaped cutting blade fixedly coupled to the front end portion of the shaft and configured to rotate about the axis together with the shaft; and a roller portion concentrically received over the front end portion rearward of the cutting blade, wherein the roller has a cylindrical outer surface configured to roll along an inside wall of a pipe while the shaft and cutting blade rotate about the axis to cut a pipe from an inside of the pipe.

Implementations of this aspect may include one or more of the following features. The rear end portion may include a polygonal shank. The blade may include a circumferential cutting edge. The cutting edge of the blade may include an abrasive material. An additional portion or an entirety of the cutting blade may include the abrasive material. The blade may be fixedly coupled to the shaft by an axial pin extending along the axis. The axial pin may be press fit into a bore in the front end portion of the shaft. The axial pin may be secured in a bore in the front end portion of the shaft by a cross-pin that extends transverse to the axis. The cutting blade may have a first radius and the roller may have a second radius that is less than the first radius. The difference between the first radius and the second radius may be approximately equal to a thickness of the pipe to be cut. The shaft may be composed of a first metal (e.g., steel) and the roller is composed of a second metal (e.g., aluminum), a plastic, or an elastomeric material (e.g., rubber or a rubber-like material). The roller may be rotatable relative to the shaft, or the roller may be non-rotatably fixed to the shaft. The roller portion may include indicia configured to indicate a depth to which the cutting blade is inserted into a pipe. A depth stop may be movably coupled to the roller portion or the shaft, the depth stop having a radius that is larger than a radius of the cutting blade to be configured to abut an end of a pipe when the cutting blade engages an inside wall of the pipe. The depth stop may include a collar with a locking mechanism configured to removably lock the depth stop to the roller portion or the shaft.

In another aspect, a pipe cutting accessory includes a shaft extending along an axis and having a front end portion a rear end portion configured to be coupled to a tool holder of a power tool. A disc-shaped cutting blade is coupled to the front end portion of the shaft and configured to rotate about the axis together with the shaft. A depth stop is movably coupled to the roller portion or the shaft, the depth stop having a radius that is larger than a radius of the cutting blade to be configured to abut an end of a pipe when the cutting blade engages an inside wall of the pipe.

Implementations of this aspect may include one or more of the following features. The depth stop may include a collar with a locking mechanism configured to removably lock the depth stop to the roller portion or the shaft. The collar may include a gap and the locking mechanism includes a set screw that spans the gap. The locking mechanism may include a pin that is movable radially to engage one or more recesses in the shaft. The locking mechanism may include a knob coupled to the pin. The knob and pin may be pullable radially to disengage the pin from the recesses. The pin may be threaded and the knob and pin may be rotatable to disengage the pin from the recesses. A roller portion may be configured to roll along an inside wall of a pipe while the shaft and cutting blade rotate about the axis to cut a pipe from an inside of the pipe. The roller portion may have a radius that is greater than a radius of the shaft and less than the radius of the cutting blade.

In another aspect, a pipe cutting accessory includes a shaft extending along an axis and having a rear end portion configured to be coupled to a tool holder of a power tool and a front end portion; and a disc-shaped cutting blade fixedly coupled to the front end portion of the shaft, configured to rotate about the axis together with the shaft, and having a circumferential cutting edge comprising an abrasive material, the cutting blade configured to rotate about the axis along with the shaft to cut a pipe from an inside of the pipe.

Implementations of this aspect may include one or more of the following features. The rear end portion may include a polygonal shank. The blade may include a circumferential cutting edge. An additional portion or an entirety of the cutting blade may include the abrasive material. The blade may be fixedly coupled to the shaft by an axial pin extending along the axis. The axial pin may be press fit into a bore in the front end portion of the shaft. The axial pin may be secured in a bore in the front end portion of the shaft by a cross-pin that extends transverse to the axis. The cutting blade may have a first radius, the roller may have a second radius that is less than the first radius, and the shaft may have a third radius that is less than the second radius. The difference between the first radius and the second radius may be approximately equal to a thickness of the pipe to be cut. A roller may be concentrically received over the front end portion. The roller may be configured to roll along an inside wall of a pipe while the shaft and cutting blade rotate about the axis to cut a pipe from its inside. The shaft may be composed of a first metal (e.g., steel) and the roller is composed of a second metal (e.g., aluminum), a plastic, or an elastomeric material (e.g., rubber or a rubber-like material). The roller may be rotatable relative to the shaft, or the roller may be non-rotatably fixed to the shaft. The roller portion may include indicia configured to indicate a depth to which the cutting blade is inserted into a pipe.

In another aspect, a pipe cutting accessory includes a shaft extending along an axis and having a rear end portion configured to be coupled to a tool holder of a power tool and a front end portion with an axial bore; a pin fixedly secured in the axial bore; and a disc-shaped cutting blade fixedly coupled to the front end portion of the shaft by the pin, the cutting blade configured to rotate about the axis together with the shaft to cut a pipe from an inside of the pipe.

Implementations of this aspect may include one or more of the following features. The rear end portion may include a polygonal shank. The blade may include a circumferential cutting edge. The cutting edge of the blade may include an abrasive material. An additional portion or an entirety of the cutting blade may include the abrasive material. The blade may be fixedly coupled to the shaft by an axial pin extending along the axis. The pin may be press fit into a bore in the front end portion of the shaft. The pin may be secured in a bore in the front end portion of the shaft by a cross-pin that extends transverse to the axis. The cutting blade may have a first radius and the roller may have a second radius that is less than the first radius. The difference between the first radius and the second radius may be approximately equal to a thickness of the pipe to be cut. A roller may be concentrically received over the front end portion. The roller may be configured to roll along an inside wall of a pipe while the shaft and cutting blade rotate about the axis to cut a pipe from its inside. The shaft may be composed of a first metal (e.g., steel) and the roller is composed of a second metal (e.g., aluminum), a plastic, or an elastomeric material (e.g., rubber or a rubber-like material). The roller may be rotatable relative to the shaft, or the roller may be non-rotatably fixed to the shaft. The roller portion may include indicia configured to indicate a depth to which the cutting blade is inserted into a pipe.

Advantages may include one or more of the following. Replacing the removable screw with a fixed connector reduces the risk of the blade becoming dislodged from the shaft. Coupling a larger diameter roller to the shaft helps maintain perpendicular alignment between the blade and the pipe to be cut and minimizes the effects of the blade striking concrete inside of which the pipe may be embedded. Having a blade with an abrasive cutting edge or surface reduces blade wear or breakage and increases blade life and durability. Indicia on the roller facilitates cutting a pipe at a more precise depth. Including a depth stop enables the pipe to be cut at a more precise location. These and other advantages and features will be apparent from the description and the drawings.

### BRIEF DESCRIPTION

FIG. 1 is a perspective view of an embodiment of a pipe cutting accessory for a power tool.
FIG. 2 is a side view of the pipe cutting accessory of FIG. 1.
FIG. 3 is a cross-sectional view along line A-A of the pipe cutting accessory of FIG. 2.
FIG. 4A is an exploded perspective view of the pipe cutting accessory of FIG. 1.
FIG. 5A is a perspective view of a cutting blade of the pipe cutting accessory of FIG. 1.
Fig. 5B is a perspective view of another cutting blade of the pipe cutting accessory of FIG. 1.
FIG. 6 is a perspective view of an axial pin of the pipe cutting accessory of FIG. 1.
FIG. 7 is a cross-sectional view of a cross-pin of the pipe cutting accessory of FIG. 1.
FIG. 8 is a side view of the cross-pin of FIG. 7.
FIG. 9 is a perspective view of another embodiment of a pipe cutting accessory for a power tool.
FIG. 10 is a side view of the pipe cutting accessory of FIG. 9.
FIG. 11 is a cross-sectional view along line A-A of the pipe cutting accessory of FIG. 10.
FIG. 12 is an exploded perspective view of the pipe cutting accessory of FIG. 9.
FIG. 13 is a perspective view of a cutting blade of the pipe cutting accessory of FIG. 9.
FIG. 14 is a perspective view of an axial pin of the pipe cutting accessory of FIG. 9.
FIG. 15 is a perspective view of a pipe cutting accessory of one of the embodiments of FIGS. 1 and 9 in use to cut a pipe.
FIG. 16 is a perspective view of a pipe cutting accessory of one of the embodiments of FIGS. 1 and 9 in use to cut a pipe.
FIG. 17 is a perspective view of another embodiment of a pipe cutting accessory for a power tool.
FIG. 18 is a side view of a pipe cutting accessory of the embodiment of FIG. 17 in use to cut a pipe, which is shown partially in cross-section.
Figs. 19 to 22 illustrate another embodiment of a pipe cutting accessory for a power tool.

### DETAILED DESCRIPTION

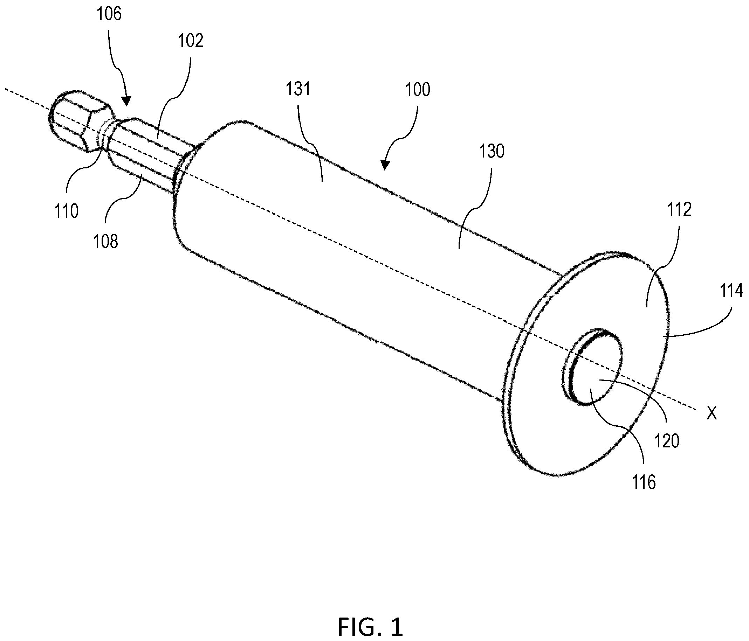

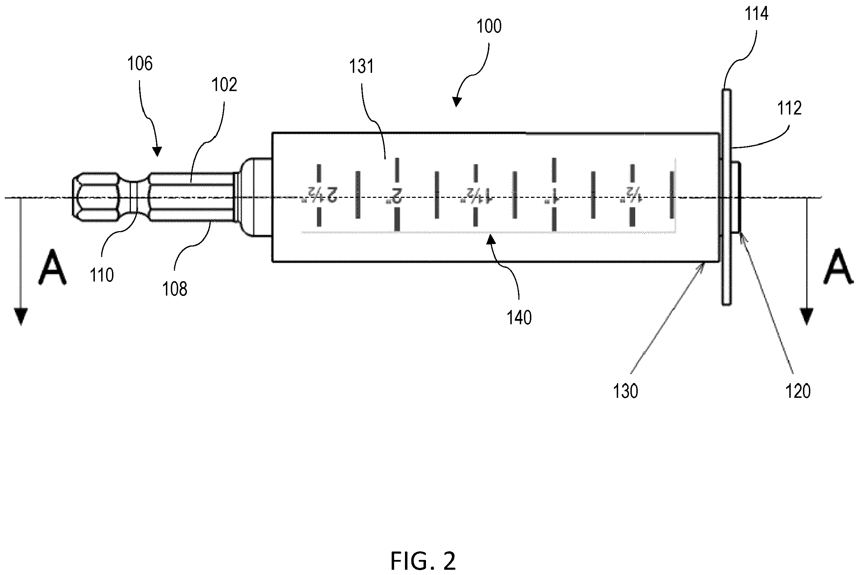

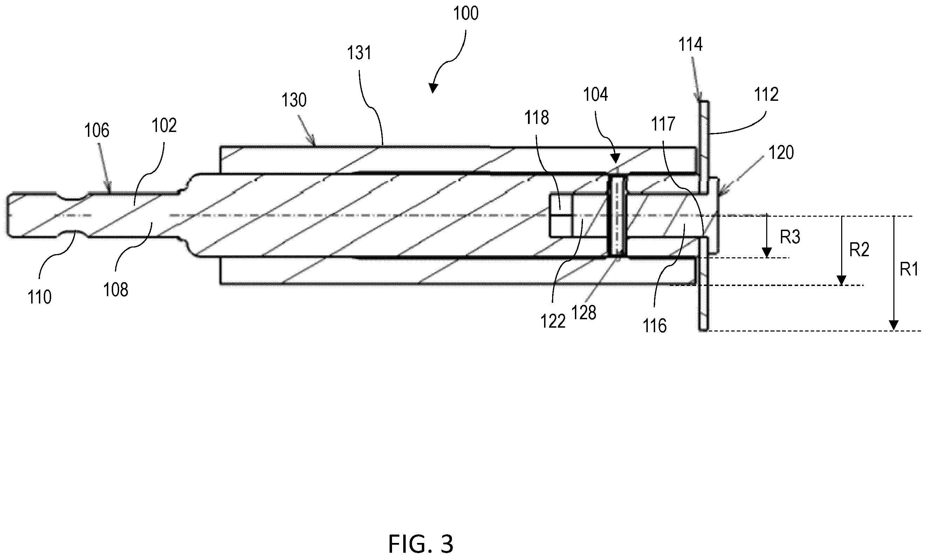

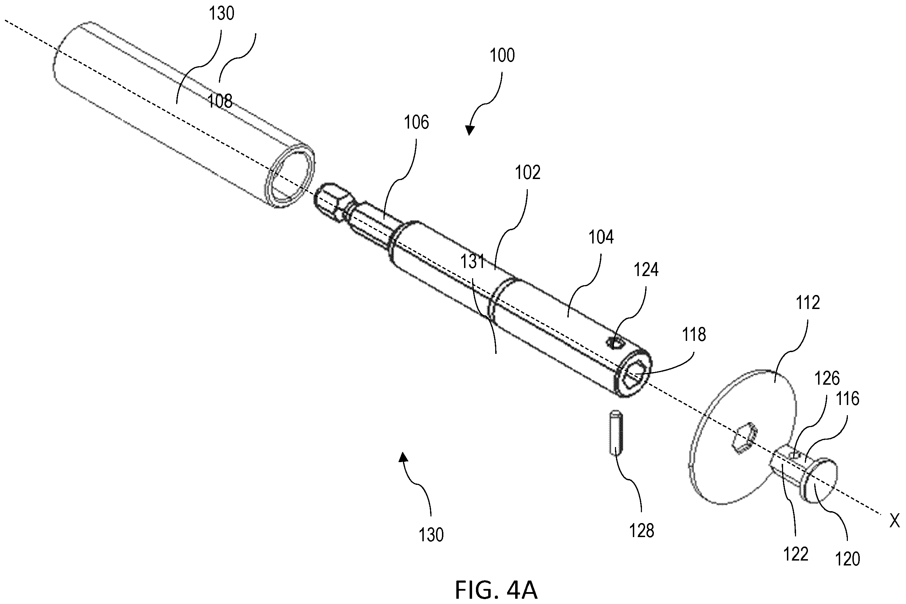

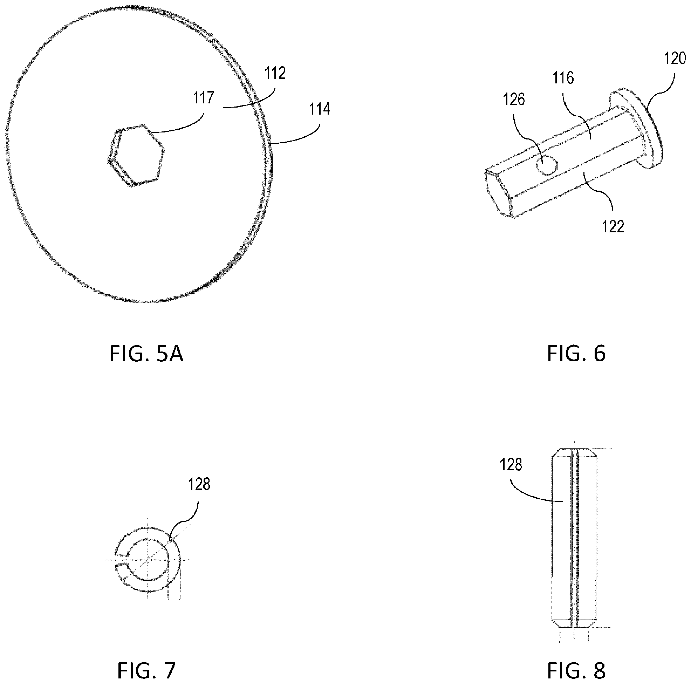

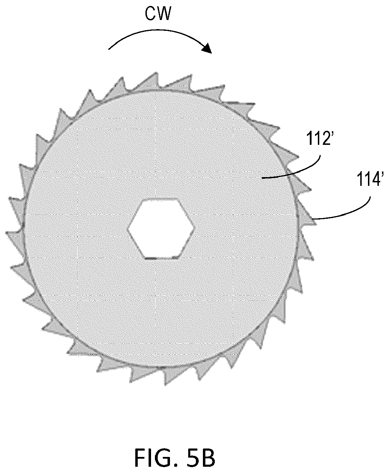

Referring to FIGS. 1-8, in an exemplary embodiment, a pipe cutting accessory 100 configured for use with a power tool includes a shaft 102 extending along an axis X with a larger diameter front end portion 104 and a small diameter rear end portion 106 configured to be coupled to a tool holder (such as a chuck or a quick release bit holder) of the power tool (such as a drill, an electric screwdriver, or an impact driver). The rear end portion 106 may include a polygonal (e.g., hexagonal) shank 108 with an annular groove 110. A disc-shaped cutting blade 112 is fixedly coupled to the front end portion 104 of the shaft 102 and is configured to rotate about the axis X together with the shaft 102. The blade 112 includes a circumferential cutting edge 114 with a first radius R1. As shown in FIG. 5A, in an implementation, at least a portion of the blade 112 (e.g., the cutting edge 114 or an entirety of a surface of the blade 112) may be composed of an abrasive material (e.g., diamond grit) to increase the durability and life of the cutting blade 112. As shown in FIG. 5B, in another implementation, the blade 112' may have a serrated cutting edge 114' with teeth 115', and the cutting edge 114' or the entirety of the blade 112' may be composed of an abrasive material (e.g., diamond grit) to increase the durability and life of the blade 112'. The teeth 114' may by assymetrical and face in one cutting direction (e.g., clockwise CW), as shown in FIG. 5B, or may be symmetrical so that they can cut in two directions (e.g., clockwise and counterclockwise).

The cutting blade 112 is fixedly coupled to the front end portion 104 of the shaft 102, e.g., by an axial pin 116 that is received through a central opening 117 in the cutting blade 112 and in an axial bore 118 in the shaft 102. The axial pin 116 includes a head 120 (which may be circular, as shown, or another shape) and a shaft 122 (which may be polygonal (e.g., hexagonal) as shown, or another shape such as cylindrical). The central opening 117 and the axial bore 118 each may have a cross-section that is polygonal (e.g., hexagonal) or another shape such as circular. The front end portion 104 of the shaft 102 may have a first cross-bore 124 transverse to the axis X and the axial pin 116 may have a second cross-bore 126 transverse to the axis X and aligned with the first cross-bore 124. The first cross-bore 124 and the second cross-bore 126 may receive a cross-pin 128 to retain the axial pin 116 in the axial bore 118 in the shaft 102. The cross-pin 128 may have a C-shaped cross section (as shown in FIG. 7) so that it acts in a spring-like manner to retain the axial pin 116 in the axial bore 118.

A roller portion 130 with a cylindrical outer surface 131 is concentrically received over the front end portion 104 of the shaft 102 and has a second radius R2 that is less than the first radius R1 of the cutting blade 112, with the shaft 102 having a third radius R3 that is less than the second radius R2. In the illustrated embodiment, the roller portion 130 is fixed to the shaft 102 so that they rotate in unison. In other embodiments, the roller portion 130 may be rotatable relative to the shaft 102 (e.g., by bearings or bushings) so that the roller portion 130 can rotate relative to the shaft 102 or at a different angular speed than the shaft 102. In an embodiment, the roller portion 130 can be composed of a different material than the shaft 102. For example, the shaft 102 may be composed of a first metal (e.g., steel) and the roller may be composed of a different second metal (e.g., aluminum), a plastic, or an elastomeric material (e.g., rubber or a rubber-like material). The roller portion 130 may include indicia 140 that indicates the depth of insertion of the blade into a pipe to be cut.

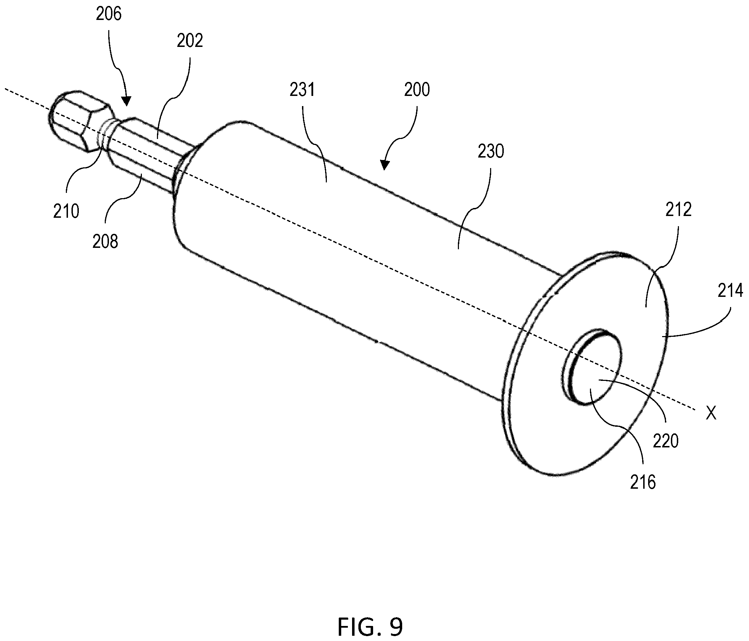

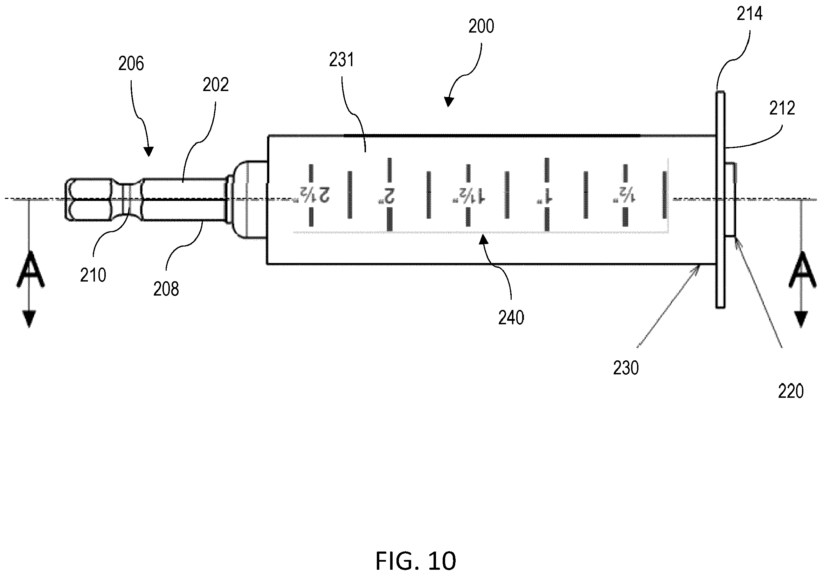

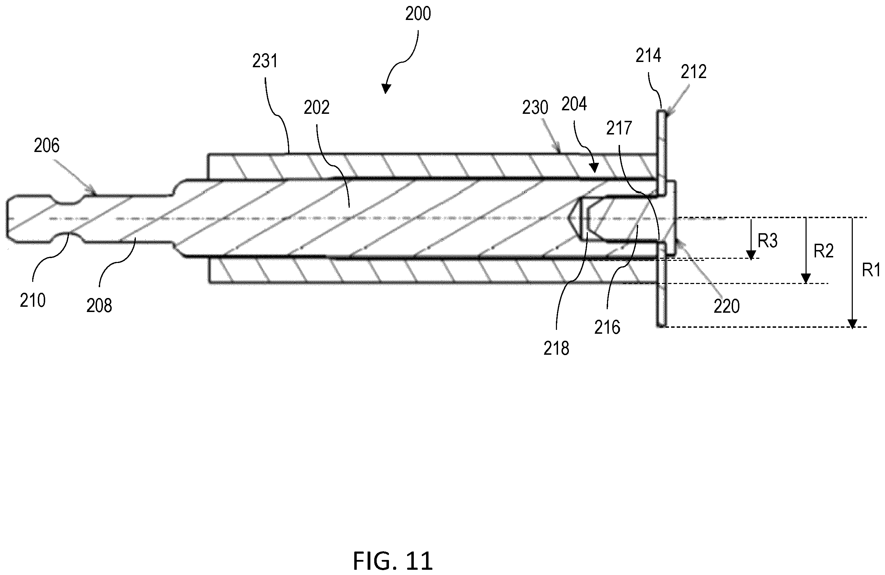

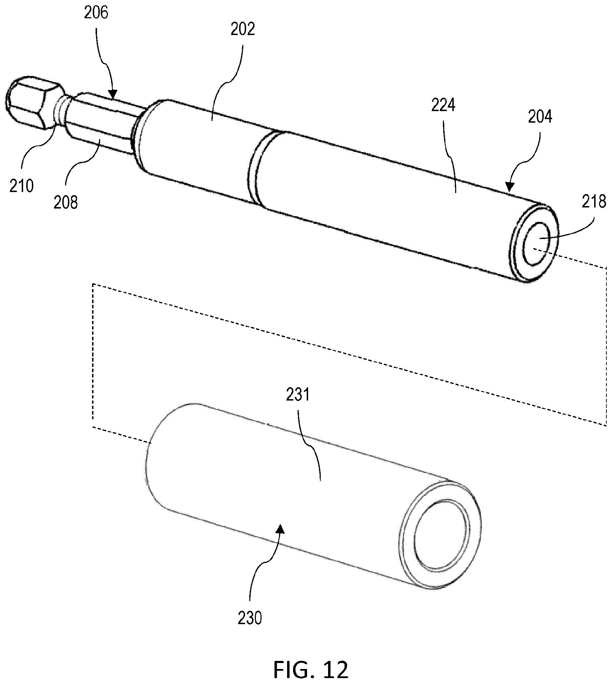

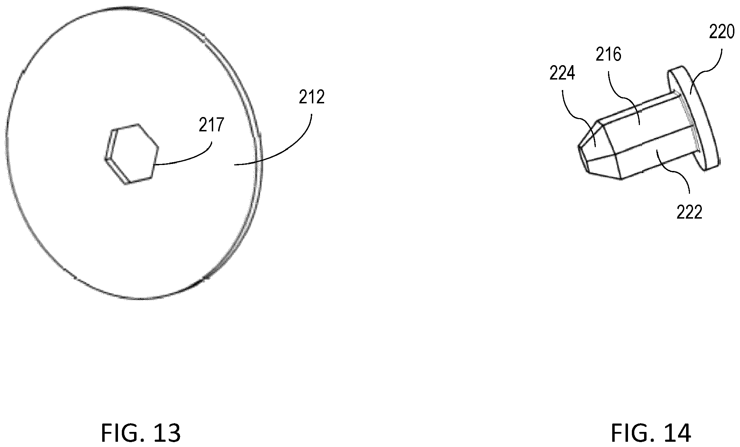

Referring to FIGS. 9-14, in another embodiment, a pipe cutting accessory 200 includes a shaft 202 extending along an axis X with a larger diameter front end portion 204 and a small diameter rear end portion 206 configured to be coupled to a tool holder (such as a chuck or a quick release bit holder) of a power tool (such as a drill or impact driver). The rear end portion 206 may include a polygonal (e.g., hexagonal) shank 208 with an annular groove 210. A disc-shaped cutting blade 212 is fixedly coupled to the front end portion 204 of the shaft 202 and is configured to rotate about the axis X together with the shaft 202. The blade 212 includes a circumferential cutting edge 214 with a first radius R1. In an implementation, at least a portion of the blade 212 (e.g., the cutting edge 214 or an entirety of a surface of the blade 212) is composed of an abrasive material (e.g., diamond grit) to increase the durability and life of the cutting blade 212.

The cutting blade 212 is fixedly coupled to the front end portion 204 of the shaft 202, e.g., by an axial pin 216 that is received through a central opening 217 in the cutting blade 212 and in an axial bore 218 in the shaft 202. The axial pin 216 includes a head 220 (which may be circular, as shown, or another shape) and a shaft 222 (which may be polygonal (e.g., hexagonal) as shown, or another shape such as cylindrical), and may have a tapered tip 224. The central opening 217 and the axial bore 218 each may have a cross-section that is polygonal (e.g., hexagonal) or another shape such as circular. The axial pin 216 may be fixedly received in the bore 218, e.g., by press fitting or swaging.

A roller portion 230 with a cylindrical outer surface 231 is concentrically received over the front end portion 204 of the shaft 202 and has a second radius R2 that is less than the first radius R1 of the cutting blade 212, with the shaft 202 having a third radius R3 that is less than the second radius R2. In the illustrated embodiment, the roller portion 230 is fixed to the shaft 202 so that they rotate in unison. In other embodiments, the roller portion 230 may be rotatable relative to the shaft 202 (e.g., by bearings or bushings) so that the roller portion 230 can rotate relative to the shaft 202 or at a different angular speed than the shaft 202. In an embodiment, the roller portion 230 can be composed of a different material than the shaft 202. For example, the shaft 202 may be composed of a first metal (e.g., steel) and the roller may be composed of a different second metal (e.g., aluminum), a plastic, or an elastomeric material (e.g., rubber or a rubber-like material). The roller portion 230 may include indicia 140 that indicates the depth of insertion of the blade into a pipe to be cut.

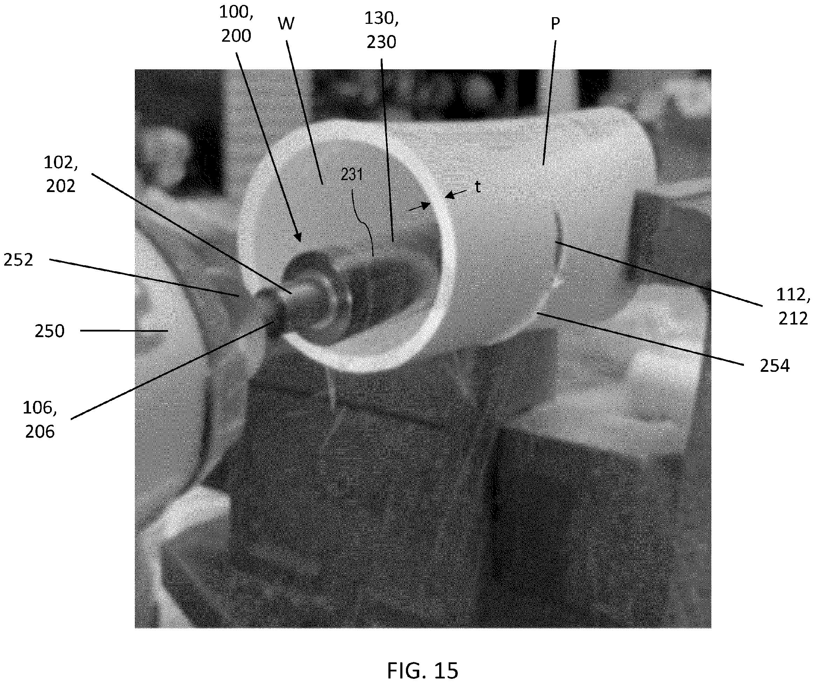

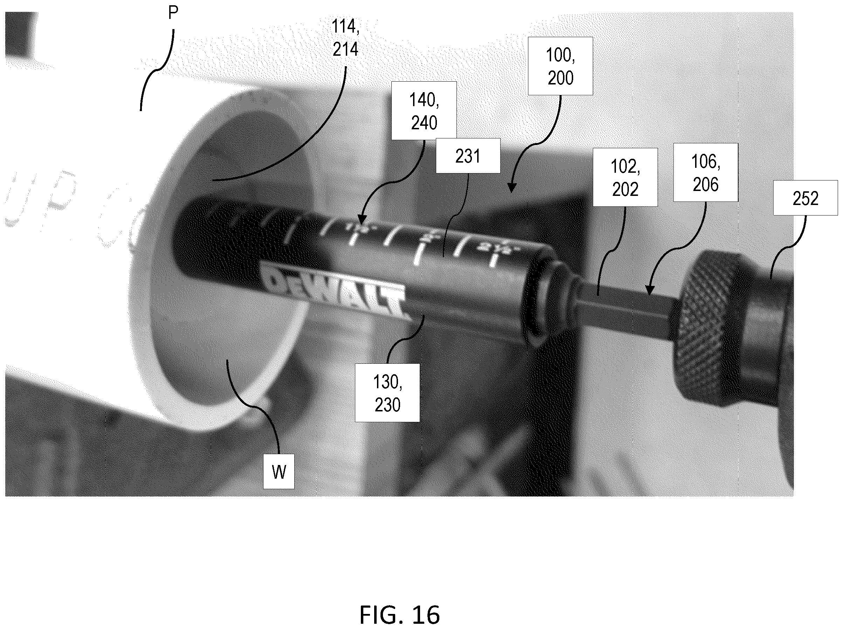

Referring to FIGS. 15 and 16, in use, the rear end portion 106, 206 of the pipe cutting accessory 110, 210 is coupled to a tool holder 252 of a power tool 250. The shaft of the pipe cutting accessory 110, 210 is inserted into a pipe P to be cut. The indicia 140, 240 may be used to estimate or determine the depth that the blade 214, 214 is inserted into the pipe P. The power tool is actuated causing the shaft to rotate the blade to cut a circumferential slot 254 in the pipe from the inside of the pipe. While the blade is cutting, the roller allows the shaft to roll along an inside wall W of a pipe P to cut a circumferential slot in the pipe P from its inside. The difference between the first radius R1 and the second radius R2 is selected to be approximately equal to a thickness T of the pipe to be cut. This is because the types of pipes to be cut (e.g., PVC pipes) are often cut while they are embedded in concrete. This minimizes blade contact with concrete, reducing the risk of damage to the blade and increasing the life and durability of the blade. In another embodiment, the first radius is up to approximately twice the second radius for instances of cutting certain pipes.

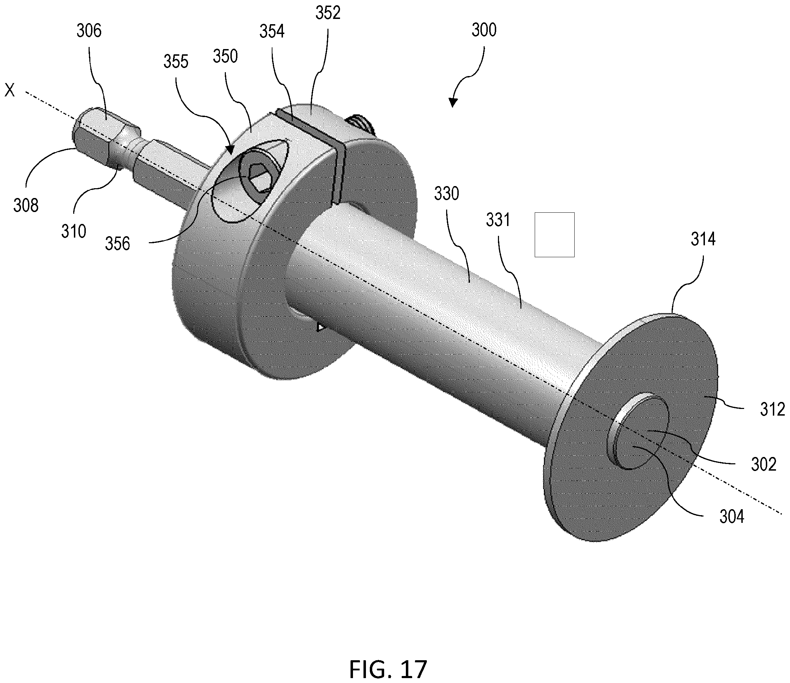

Referring to FIG. 17, in another embodiment, a pipe cutting accessory 300 includes a shaft 302 extending along an axis X with a larger diameter front end portion 304 and a small diameter rear end portion 306 configured to be coupled to a tool holder (such as a chuck or a quick release bit holder) of a power tool (such as a drill or impact driver). The rear end portion 306 may include a polygonal (e.g., hexagonal) shank 308 with an annular groove 310. A disc-shaped cutting blade 312 may be fixedly or removably coupled to the front end portion 304 of the shaft 302 (e.g., in the manner described with respect to the embodiments discussed above) and may be configured to rotate about the axis X together with the shaft 302. The blade 312 includes a circumferential cutting edge 314 with a first radius R1. In an implementation, at least a portion of the blade 312 (e.g., the cutting edge 314 or an entirety of a surface of the blade 312) is composed of an abrasive material (e.g., diamond grit) to increase the durability and life of the cutting blade 312.

A roller portion 330 with a cylindrical outer surface 331 is concentrically received over the front end portion 304 of the shaft 302 and has a second radius R2 that is less than the first radius R1 of the cutting blade 312. In the illustrated embodiment, the roller portion 330 is fixed to the shaft 302 so that they rotate in unison. In other embodiments, the roller portion 330 may be rotatable relative to the shaft 302 (e.g., by bearings or bushings) so that the roller portion 330 can rotate relative to the shaft 302 or at a different angular speed than the shaft 302. In an embodiment, the roller portion 330 can be composed of a different material than the shaft 302. For example, the shaft 302 may be composed of a first metal (e.g., steel) and the roller may be composed of a different second metal (e.g., aluminum), a plastic, or an elastomeric material (e.g., rubber or a rubber-like material). The roller portion 330 may include indicia 340 that indicate the depth of insertion of the blade into a pipe to be cut.

The pipe cutting accessory 300 additionally includes a depth stop 350 that is movably coupled to the shaft 302 and/or the roller portion 330. The depth stop 350 includes a collar 352, which may be C-shaped with a gap 354. The collar 352 of the depth stop 350 has a fourth radius R4 that is greater than the first radius R1 of the cutting blade 312. The depth stop 350 includes a locking mechanism 355, e.g., in the form of a set screw 356 received in a threaded opening 358 and that spans the gap 354. The locking mechanism 355 may be unlocked by loosening the set screw 356 to allow adjustment of the position of the depth stop 350 along the roller portion 330 and/or removal of the depth stop 350 from the roller portion 330. The locking mechanism 355 may be locked to retain the depth stop 350 at a selected position along the roller portion 330 by tightening the set screw 356. The indicia 340 on the roller portion 330 may assist the user in selecting the desired position of the depth stop 330.

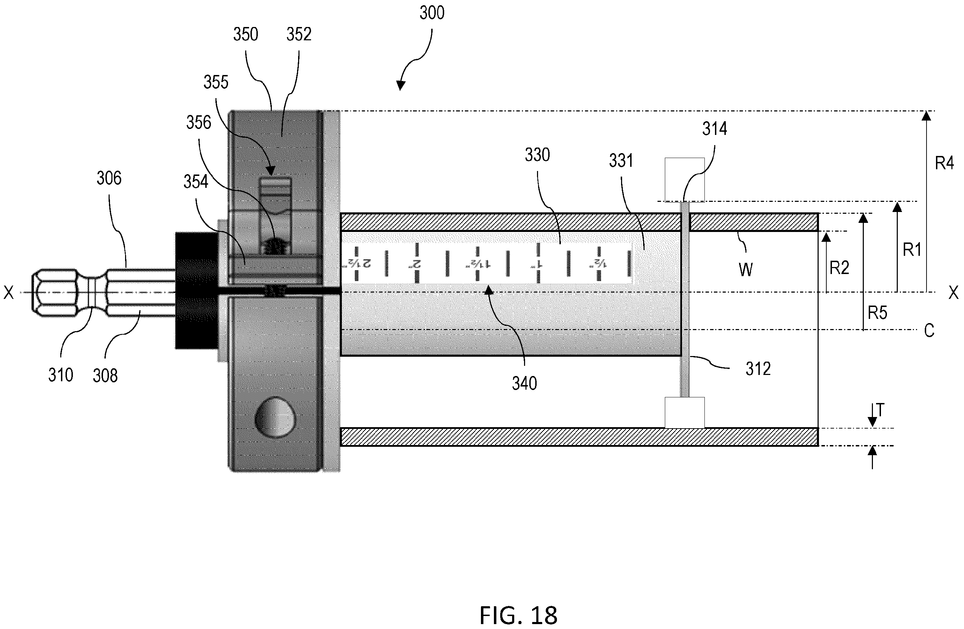

In use, as shown in FIG. 18, the depth stop 350 is unlocked, moved to a desired location along the roller portion 330, and then locked in the desired location. The rear end portion 306 of the pipe cutting accessory 310 is coupled to a tool holder of a power tool. The shaft of the pipe cutting accessory 310 is inserted into a pipe P to be cut with the depth stop 350 abutting a rear end of the pipe P and the shaft axis X offset from a centerline C of the pipe P so that the roller portion 350 abuts an inside wall W of the pipe P. The power tool is actuated causing the shaft to rotate the blade to cut a circumferential slot 354 in the pipe P from the inside of the pipe. While the blade is cutting, the roller portion 330 rolls along an inside wall W of a pipe P to cut a circumferential slot in the pipe P from its inside. The difference between the first radius R1 and the second radius R2 is selected to be approximately equal to a thickness T of the pipe to be cut. This is because the types of pipes to be cut (e.g., PVC pipes) are often cut while they are embedded in concrete. This minimizes blade contact with concrete, reducing the risk of damage to the blade and increasing the life and durability of the blade. In another embodiment, the first radius is up to approximately twice the second radius for instances of cutting certain pipes. The fourth radius R4 of the depth stop 350 is selected to be larger than the first radius R1 of the blade and larger than a fifth radius R5 of the pipe P so that the depth stop 350 abuts the end of the pipe.

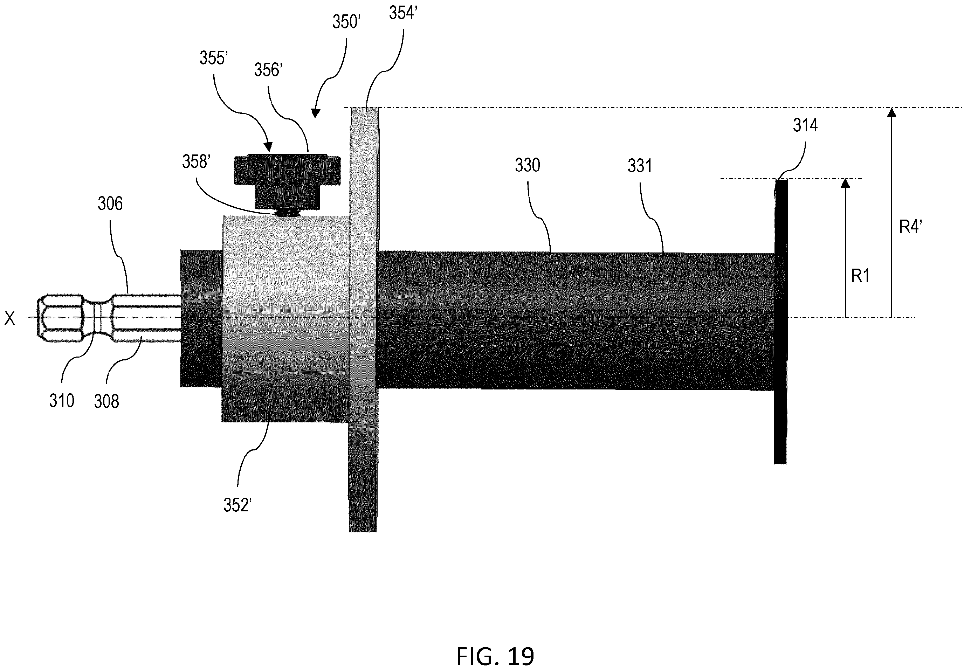

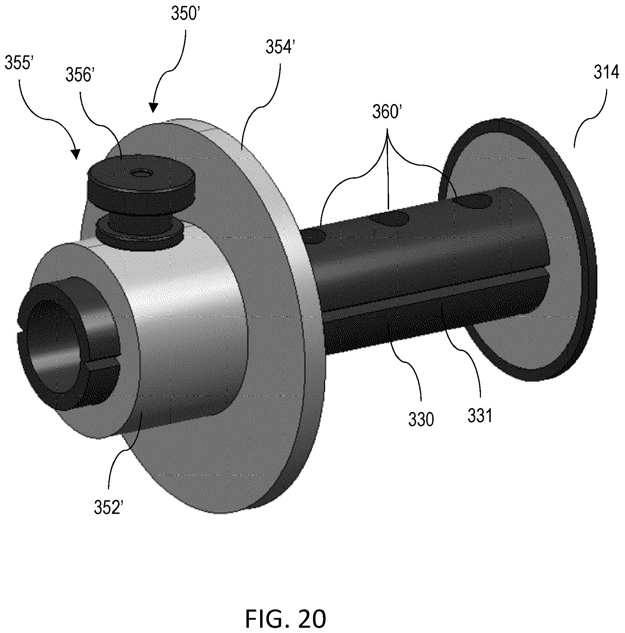

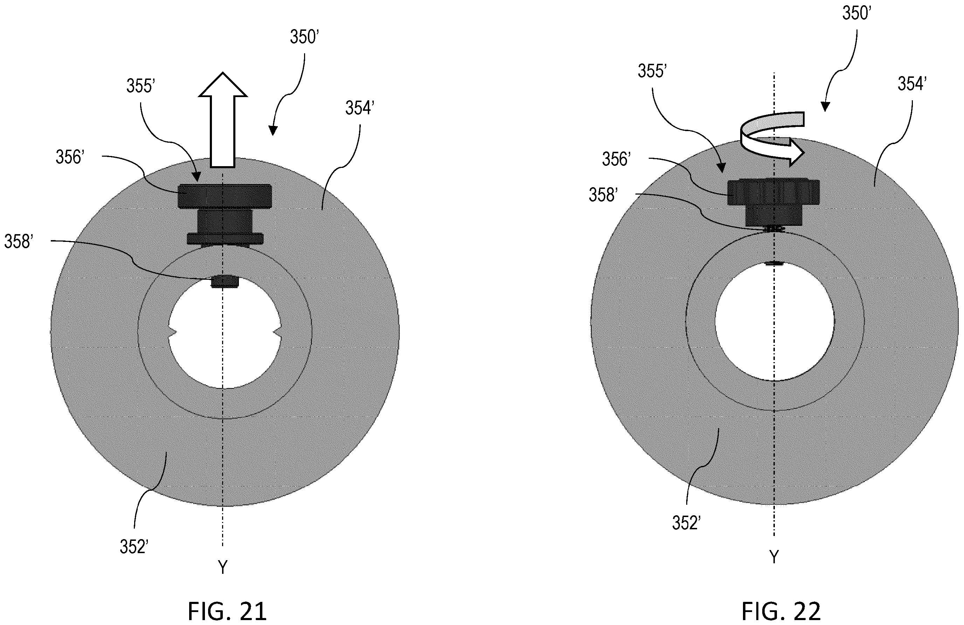

Referring to FIGS. 19-22, in another embodiment, a depth stop 350' for use with the pipe cutting accessory 300 includes a collar 352' (which may be cylindrical) with a locking mechanism 355'. The locking mechanism 355' may include a knob 356' coupled to a pin 358'. The pin 358' may be engageable with one or more of a plurality of recesses 360' in the shaft 302 and/or roller portion 330 to lock the depth stop collar 352' in a desired location along the axis X. In one implementation, as shown in FIG. 21 the knob 356' and pin 358' may be pullable radially along axis Y relative to the collar 352' between a locked position in which the pin 358' engages one of the recesses and an unlocked position in which the pin 358' is disengaged from the recesses. In another implementation, as shown in FIG. 22, the pin 358' may be threaded (e.g., like a set screw) and the knob 356' and the pin 358' may be rotatable about axis Y to move the pin 358' radially along axis Y between the locked and unlocked position. The collar 352' may carry a flange 354' that has a radius R4' that is greater than the radius R1 of the cutting blade 314. The flange 354' may abut an end of the pipe to be cut to control the depth to which the blade is inserted into the pipe.

Other locking mechanisms may be used to releasably lock the depth stop 350 in a desired position, such as a cam latch, an over-center latch, a quick release lever, etc.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of this application.

## Claims

1. A pipe cutting accessory comprising:
a shaft extending along an axis and having a front end portion a rear end portion configured to be coupled to a tool holder of a power tool;
a disc-shaped cutting blade coupled to the front end portion of the shaft and configured to rotate about the axis together with the shaft; and
a roller portion concentrically received over the front end portion rearward of the cutting blade, wherein the roller has a cylindrical outer surface configured to roll along an inside wall of a pipe while the shaft and cutting blade rotate about the axis to cut a pipe from an inside of the pipe.

2. The pipe cutting accessory of claim 1, wherein the rear end portion comprises a polygonal shank.

3. The pipe cutting accessory of claim 1 or 2, wherein the blade includes a circumferential cutting edge.

4. The pipe cutting accessory of claim 3, wherein the cutting edge is serrated.

5. The pipe cutting accessory of any preceding claim, wherein the cutting blade comprises an abrasive material.

6. The pipe cutting accessory of any preceding claim, wherein the blade is fixedly coupled to the shaft by an axial pin extending along the axis.

7. The pipe cutting accessory of claim 6, wherein the axial pin is press fit into a bore in the front end portion of the shaft.

8. The pipe cutting accessory of claim 6 or 7, wherein the axial pin is secured in a bore in the front end portion of the shaft by a cross-pin that extends transverse to the axis.

9. The pipe cutting accessory of any preceding claim, wherein the cutting blade has a first radius, the roller has a second radius that is less than the first radius, and the shaft has a third radius that is less than the second radius.

10. The pipe cutting accessory of claim 9, wherein the difference between the first radius and the second radius is approximately equal to a thickness of the pipe to be cut.

11. The pipe cutting accessory of any preceding claim, wherein the shaft is composed of a first material and the roller is composed of a different second material.

12. The pipe cutting accessory of any preceding claim, wherein the roller is rotatable relative to the shaft.

13. The pipe cutting accessory of any of claims 1 to 11, wherein the roller is non-rotatably fixed to the shaft.

14. The pipe cutting accessory of any preceding claim, wherein the roller portion includes indicia configured to indicate a depth to which the cutting blade is inserted into a pipe.

15. The pipe cutting accessory of any preceding claim, further comprising a depth stop movably coupled to the roller portion or the shaft, the depth stop having a radius that is larger than a radius of the cutting blade to be configured to abut an end of a pipe when the cutting blade engages an inside wall of the pipe, optionally wherein the depth stop comprises a collar with a locking mechanism configured to removably lock the depth stop to the roller portion or the shaft.
